# FASCICULE DE BREVET EUROPEEN

(11) **EP 3 060 787 B1**
(45) Date de publication et mention de la délivrance du brevet: **08.05.2019**
(21) Numéro de dépôt: 14824870.1
(22) Date de dépôt: 21.10.2014
(51) Int. Cl.: F02K 9/50

(54) **DISPOSITIF DE PRESSURISATION AUTOGÈNE D'UN RÉSERVOIR D'ERGOL**
AUTOGENE DRUCKBEAUFSCHLAGUNGSVORRICHTUNG FÜR EINEN TREIBMITTELBEHÄLTER
AUTOGENOUS PRESSURISATION DEVICE FOR A PROPELLANT RESERVOIR

(30) Priorité: 24.10.2013 FR 1360363
(43) Date de publication de la demande: 31.08.2016
(73) Titulaire: ArianeGroup SAS, 75015 Paris (FR)
(72) Inventeur: CARATGE, Antoine, F-92430 Marnes La Coquette (FR); SANNINO, Jean Michel, F-27950 Saint-Marcel (FR); DREYER, Stéphanie, 27200 VERNON (FR); BARTHOULOT, Jean-Luc, F-27510 Panilleuse (FR)
(74) Mandataire: Calvo de Nó, Rodrigo
(86) Numéro de dépôt international: PCT/FR2014/052665
(87) Numéro de publication internationale: WO 2015/059395

(56) Documents cités:
- FR-A1- 2 975 441
- FR-A1- 2 976 626
- FR-A1- 2 984 452
- US-A- 3 188 799

## Description

### DOMAINE DE L'INVENTION

Le présent exposé concerne un dispositif de pressurisation, et plus particulièrement un dispositif de pressurisation autogène d'un réservoir principal d'ergol, par exemple pour un moteur-fusée.

### ARRIERE-PLAN

Dans les engins propulsés par des moteurs à réaction, en particulier des moteurs-fusées, les réservoirs des ergols doivent être pressurisés lors du démarrage des moteurs-fusées, mais aussi en permanence lors du fonctionnement des moteurs-fusées. En effet, la pression en entrée de chaque moteur doit être maintenue pour des raisons d'opérabilité, et il s'avère nécessaire de remplacer le volume de l'ergol aspiré par un gaz, à la bonne pression. Ce gaz est fourni par un système de pressurisation du réservoir.

Plus particulièrement, pour les moteurs-fusées cryogéniques alimentés en ergols cryogéniques, comme par exemple de l'oxygène ou de l'hydrogène liquide, les réservoirs de ces ergols cryogéniques peuvent être dépressurisés pendant les phases de vol balistiques, afin de refroidir les ergols qui se sont précédemment échauffés (sous l'action du soleil, ou par des flux de conduction venant d'un réservoir adjacent plus chaud). Pour cela, la pression du réservoir est amenée à une valeur légèrement inférieure à la pression de saturation de l'ergol en question. L'ergol se met à bouillir, et l'énergie nécessaire à la vaporisation de l'ergol est prise dans la masse d'ergol liquide, qui donc se refroidit. Pour assurer ensuite l'allumage du moteur, il est nécessaire de repressuriser ces réservoirs d'ergols préalablement dépressurisés.

Les systèmes de repressurisation habituellement utilisés font usage d'un gaz de repressurisation, tel que l'hélium, stocké à haute pression sous forme gazeuse. Cependant, compte-tenu des problèmes liés au stockage d'un gaz sous pression et à l'augmentation de la masse embarquée, les industriels ont mis au point des systèmes de pressurisation dite « autogène », dans lesquels le fluide servant à la pressurisation d'un réservoir n'est autre que l'ergol stocké dans ce réservoir, à l'état gazeux.

Il est connu, par exemple de la demande de brevet FR 2 975 441 A1, un dispositif de pressurisation autogène d'un réservoir principal d'ergol, comprenant une conduite de pressurisation reliée au réservoir principal pour injecter de l'ergol dans ledit réservoir principal, et un réchauffeur pour chauffer l'ergol. Un tel dispositif peut comprendre une vanne de pressurisation disposée sur la conduite de pressurisation, auquel cas le réchauffeur est placé de manière à chauffer l'ergol en amont de la vanne de pressurisation. Ainsi, la pression de l'ergol augmente à son passage dans le réchauffeur et l'ergol réchauffé peut être utilisé pour repressuriser le réservoir principal.

Cependant, un tel dispositif nécessite une régulation de la vanne de pressurisation en continu afin de contrôler la pression dans le réservoir principal. De plus, la pressurisation du réservoir principal est effectuée au fur et à mesure du débit de l'ergol à travers le réchauffeur, ce qui peut s'avérer trop lent.

### PRESENTATION DE L'INVENTION

Le but de la présente invention est de remédier au moins substantiellement aux inconvénients mentionnés ci-dessus.

Ce but est atteint grâce au fait que le dispositif de pressurisation comprend un réservoir tampon relié à la conduite de pressurisation en amont de la vanne de pressurisation.

Ainsi, l'ergol contenu dans le réservoir tampon forme une source de fluide de pressurisation disponible à tout moment pour pressuriser le réservoir principal. En outre, le réservoir tampon joue un rôle de régulation pour le contrôle de la pression dans le réservoir principal. Ainsi, une alimentation en continu du système de pressurisation autogène n'est pas nécessaire.

Dans le présent exposé, sauf précision contraire, les termes amont et aval sont utilisés en référence au sens normal de circulation de l'ergol, notamment du réservoir tampon vers le réservoir principal en ce qui concerne l'ergol de pressurisation.

Par ailleurs, dans le présent exposé, l'état liquide et l'état gazeux sont à comprendre selon une acception large englobant l'état supercritique. Par extension, un fluide à l'état supercritique sera dit liquide s'il est relativement dense et gazeux s'il est relativement peu dense. De même, les termes de vaporisation et condensation peuvent s'appliquer à un fluide supercritique pour désigner respectivement une diminution et une augmentation de sa densité, même s'il n'y a pas de changement d'état en soi. Enfin, la vaporisation (resp. la condensation) peut désigner un passage de l'état liquide à l'état gazeux (resp. de l'état gazeux à l'état liquide) strictement dits via un passage par l'état supercritique.

Dans certains modes de réalisation, le réchauffeur est installé de manière à chauffer l'ergol contenu dans le réservoir tampon. De cette façon, le chauffage est mis en oeuvre de manière efficace pour un volume à faible surface spécifique. Par ailleurs, la manipulation de réservoirs sous pression est risquée, notamment lors des opérations d'exploitation du lanceur au sol; dans de tels modes de réalisation, il n'est pas nécessaire de remplir le réservoir tampon en ergol gazeux dès le début puisqu'il est possible de chauffer et vaporiser l'ergol contenu dans le réservoir tampon une fois ledit réservoir tampon installé et rempli partiellement en ergol liquide.

Dans certains modes de réalisation, le dispositif de pressurisation comprend une première conduite d'alimentation reliant le réservoir principal au réservoir tampon et apte à alimenter le réservoir tampon en ergol provenant du réservoir principal. Le réservoir tampon peut donc être alimenté en ergol liquide provenant du réservoir principal.

Alternativement ou en combinaison, dans certains modes de réalisation, le dispositif de pressurisation comprend une deuxième conduite d'alimentation reliée au réservoir tampon et pouvant se connecter à un circuit d'alimentation en ergol d'un moteur-fusée pour alimenter le réservoir tampon en ergol provenant dudit circuit d'alimentation. Avantageusement, ledit ergol provenant du circuit d'alimentation est de l'ergol sous pression.

Le circuit d'alimentation en ergol du moteur-fusée peut comprendre un circuit régénératif permettant de refroidir la chambre de combustion, et par là même de servir de source chaude nécessaire au fonctionnement des turbines et de source d'ergol gazeux. Dans de tels modes de réalisation, via la deuxième conduite d'alimentation, le moteur-fusée peut fournir au réservoir tampon de l'ergol réchauffé ou vaporisé, par exemple grâce au circuit régénératif. Le remplissage du réservoir tampon avec un ergol plus chaud permet d'économiser de l'énergie en utilisant moins le réchauffeur.

Dans certains modes de réalisation, le dispositif de pressurisation comprend en outre une conduite d'échappement connectée au réservoir tampon et munie d'un dispositif de régulation de la pression dans le réservoir tampon.

Le dispositif de régulation de pression peut être une soupape, un clapet taré, ou n'importe quel dispositif équivalent jugé compatible par l'homme du métier. La conduite d'échappement et le dispositif de régulation de pression permettent donc de s'assurer que la pression dans le réservoir tampon n'excède pas une pression de dimensionnement au-delà de laquelle la résistance mécanique du réservoir tampon ou de la conduite de pressurisation ou encore l'opérabilité de la vanne de pressurisation, par exemple, pourrait être mise en défaut.

Dans un mode de réalisation préféré , et selon la revendication 1, le réchauffeur est électrique. Il peut s'agir d'une résistance électrique. Le réchauffeur est ainsi particulièrement simple dans sa conception et son fonctionnement. Il peut en outre être contrôlé avec précision. Par rapport à un échangeur de chaleur, un réchauffeur électrique a l'avantage de ne pas ôter de chaleur à une quelconque autre partie du dispositif de pressurisation, notamment aux lignes d'alimentation des turbines du moteur. Dans le cas de moteurs à cycle à expanseur, ouvert ou non (ces cycles étant connus par l'homme du métier sous la terminologie « bleed » ou « expander »), la température des ergols en entrée des turbines est un paramètre de première importance pour des raisons de fonctionnalité moteur ; il convient donc d'éviter d'utiliser ces ergols comme sources chaudes. L'utilisation d'un réchauffeur électrique ne perturbe donc pas le dimensionnement et les paramètres de fonctionnement des systèmes existants.

Dans un mode de réalisation préféré , et selon la revendication 1, le dispositif de pressurisation comprend une pile à combustible électriquement reliée au réchauffeur pour fournir de l'électricité au réchauffeur. La pile à combustible forme une source de courant simple et fiable. En outre, elle assure une utilisation optimale des ressources disponibles dans le dispositif de pressurisation.

Dans un mode de réalisation préféré , et selon la revendication 1, une conduite auxiliaire s'étend entre le réservoir tampon et la pile à combustible pour alimenter en ergol la pile à combustible. Dans de tels modes de réalisation, la pile à combustible est reliée indirectement au réservoir principal via le réservoir tampon. Elle est donc réellement alimentée par l'ergol provenant du réservoir tampon, lequel ergol peut être sous forme gazeuse. Le réservoir tampon peut donc servir à réguler aussi l'ergol alimentant la pile à combustible.

Le présent exposé concerne également un dispositif d'alimentation de moteur-fusée comprenant un premier réservoir principal apte à contenir un premier ergol, un premier dispositif de pressurisation pour pressuriser le premier réservoir principal, un deuxième réservoir principal apte à contenir un deuxième ergol et un deuxième dispositif de pressurisation pour pressuriser le deuxième réservoir principal, dans lequel la pile à combustible est configurée pour produire de l'électricité à partir de la réaction entre le premier ergol et le deuxième ergol.

Un tel dispositif d'alimentation présente une pressurisation autogène pour chaque réservoir principal. Une seule pile à combustible alimentée en le premier ergol et le deuxième ergol permet de fournir de l'électricité au réchauffeur électrique de chaque dispositif de pressurisation autogène. Un tel dispositif d'alimentation est donc particulièrement compact et ne nécessite pas d'autre fluide d'alimentation ou de pressurisation que les ergols contenus dans les réservoirs principaux.

Le présent exposé concerne également un procédé de pressurisation d'un réservoir principal d'ergol, caractérisé en ce qu'il comprend :
- le remplissage d'un réservoir tampon en ergol à partir du réservoir principal;
- le chauffage, par un réchauffeur électrique alimenté par une pile à combustible du fluide de pressurisation situé en amont d'une vanne de pressurisation, la vanne de pressurisation étant disposée sur une conduite de pressurisation reliant le réservoir tampon au réservoir principal, et la pile à combustible étant alimentée en ergol par une conduite auxiliaire s'étendant entre le réservoir tampon et ladite pile à combustible;
- l'ouverture de la vanne de pressurisation pour permettre la circulation de l'ergol chauffé vers le réservoir principal.

Grâce à un tel procédé, le réservoir principal peut être pressurisé de manière autogène sans prévoir de système complexe de régulation puisque la régulation est effectuée par le biais du réservoir tampon. De plus, grâce au chauffage (voire à la vaporisation) de l'ergol sur place, il n'est pas nécessaire de manipuler de réservoir sous pression, notamment lors de la préparation du lanceur au sol, ce qui diminue sensiblement les risques d'explosion lors de l'installation des réservoirs ou de l'étage et facilite grandement les opérations d'exploitation, en particulier au sol, par les équipes du métier. En effet, le réservoir tampon peut être rempli en ergol liquide provenant du réservoir principal. Ce remplissage peut être se réaliser par simple gravité (notamment lorsque l'étage comprenant le réservoir principal est au sol).

Dans certains modes de réalisation, le procédé de pressurisation comprend, avant l'étape de remplissage du réservoir tampon, le remplissage du réservoir principal en ergol à l'état liquide à partir d'une alimentation d'ergol externe.

### BREVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente un dispositif d'alimentation en ergol d'un moteur-fusée ;
- les figures 2A et 2B représentent chacune un type possible de restriction utilisé dans le dispositif d'alimentation de la figure 1.

### DESCRIPTION DETAILLEE DE L'INVENTION

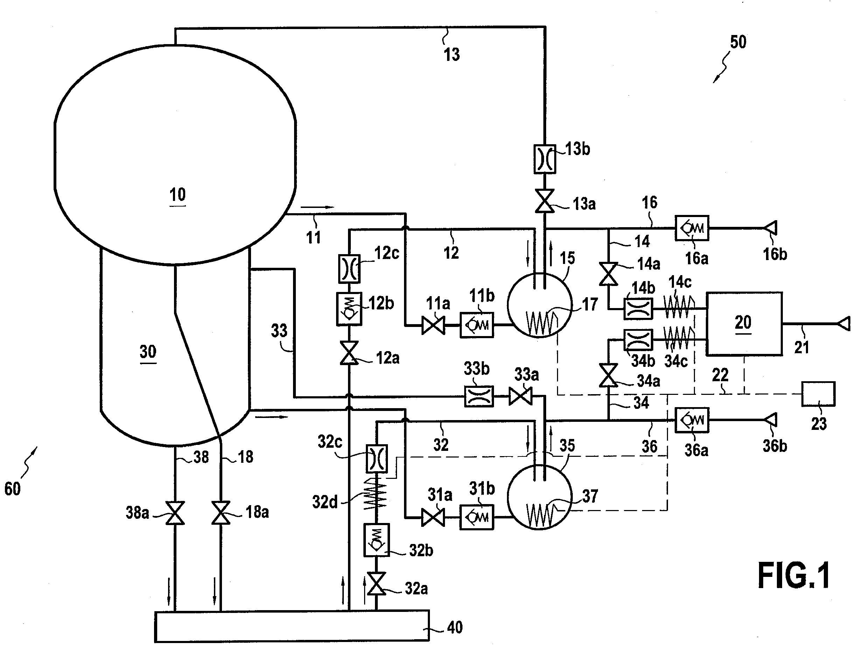

Un dispositif d'alimentation 60 d'un moteur-fusée 40 est représenté sur la figure 1. Ce dispositif d'alimentation 60 comprend un premier réservoir principal 10 apte à contenir un premier ergol, par exemple de l'hydrogène liquide, un premier dispositif de pressurisation pour pressuriser le premier réservoir principal 10, un deuxième réservoir principal 30 apte à contenir un deuxième ergol, par exemple de l'oxygène liquide, et un deuxième dispositif de pressurisation pour pressuriser le deuxième réservoir principal 30. Le moteur-fusée 40 est alimenté en premier ergol (respectivement en deuxième ergol) par une première conduite 18 (resp. une deuxième conduite 38) munie d'une première vanne 18a (resp. une deuxième vanne 38a). Les conduites 18, 38 sont raccordées, au sein du moteur-fusée 40, à un circuit d'alimentation (non représenté) pouvant comprendre d'autres conduites, des pompes, d'autres vannes, etc.

Le moteur-fusée 40 est de composition classique et bien connue de l'homme du métier. Il peut s'agir en particulier, dans le cadre de la présente invention, d'un moteur à cycle sans générateur de gaz, par exemple un moteur à cycle de type « expander » ou « bleed ». Si les sources chaudes d'un tel moteur sont utilisées par un système de pressurisation, cela peut affecter de manière significative les propres performances du moteur.

Chaque réservoir principal 10, 30 dispose d'un dispositif de pressurisation. Dans le présent mode de réalisation, les deux dispositifs de pressurisation sont très similaires, c'est pourquoi on ne décrira que le dispositif de pressurisation 50 du premier réservoir principal 10. Sauf mention contraire, toutes les explications concernant les éléments relatifs au dispositif de pressurisation du premier réservoir principal 10 peuvent s'appliquer également aux éléments correspondants relatifs au dispositif de pressurisation du deuxième réservoir principal 30. Des variantes peuvent bien sûr être prévues selon les objectifs visés par l'homme du métier.

Le dispositif de pressurisation 50 comprend un réservoir tampon 15 et une conduite de pressurisation 13 reliant le réservoir tampon 15 au réservoir principal 10 pour injecter de l'ergol dans ledit réservoir principal 10. La conduite de pressurisation 13 est munie d'une vanne de pressurisation 13a et d'une restriction 13b pour contrôler le débit de l'ergol de pressurisation. Un réchauffeur électrique 17 chauffe l'ergol contenu dans le réservoir tampon 15. Le réchauffeur électrique 17 peut être placé à l'intérieur du réservoir tampon 15 ou à sa périphérie. Grâce au réchauffeur 17, l'ergol injecté par la conduite de pressurisation 13 dans le réservoir principal 10 se trouve sous forme gazeuse.

Le réservoir tampon 15 peut être suffisamment grand pour permettre la repressurisation complète du réservoir principal 10 après une phase balistique précédant un rallumage du moteur-fusée 40.

Le dispositif de pressurisation 50 comprend également une première conduite d'alimentation 11 reliant le réservoir principal 10 au réservoir tampon 15 et apte à alimenter le réservoir tampon 15 en ergol provenant du réservoir principal 10. La première conduite d'alimentation 11 est munie d'une vanne 11a et d'un clapet anti-retour 11b pour assurer la circulation unidirectionnelle de l'ergol du réservoir principal 10 vers le réservoir tampon 15. Ledit ergol provenant du réservoir principal 10 est généralement de l'ergol liquide.

Le dispositif de pressurisation 50 comprend en outre une deuxième conduite d'alimentation 12 reliée au réservoir tampon 15 et pouvant se connecter au circuit d'alimentation (non représenté) du moteur-fusée 40 pour alimenter le réservoir tampon 15 en ergol provenant dudit circuit d'alimentation. Notamment lorsque le circuit d'alimentation comprend un circuit régénératif, ou plus généralement un circuit de récupération de la chaleur dégagée par la chambre de combustion, l'ergol envoyé du moteur-fusée vers la deuxième conduite d'alimentation 12 peut être de l'ergol réchauffé, éventuellement vaporisé. Ainsi, tandis que la première conduite d'alimentation 11 permet de remplir le réservoir tampon 15 en ergol liquide, la deuxième conduite d'alimentation 12 permet de remplir le réservoir tampon 15 en ergol plus chaud, éventuellement vaporisé. Des économies d'énergie pour le réchauffeur 17 sont donc possibles.

La deuxième conduite d'alimentation 12 est munie d'une vanne 12a, d'un clapet anti-retour 12b et d'une restriction 12c pour contrôler le débit d'ergol gazeux alimentant le réservoir tampon 15. A l'inverse, la première conduite d'alimentation 11 ne nécessite pas de restriction puisque le débit d'ergol liquide est faible car passant typiquement dans une canalisation de petit diamètre.

Dans le mode de réalisation représenté sur la figure 1, l'ergol entrant dans la deuxième conduite de pressurisation 12 est suffisamment chaud pour rejoindre le réservoir tampon 15. Par exemple, il peut s'agir d'hydrogène ayant servi à refroidir la chambre de combustion, qui se trouve donc à l'état gazeux. A l'inverse, l'oxygène est fourni à la deuxième conduite d'alimentation 32 à l'état liquide car il n'y a généralement pas d'oxygène chaud présent dans le moteur-fusée pour des raisons thermodynamiques et de sécurité. Pour réchauffer l'oxygène liquide avant son introduction dans le réservoir tampon d'oxygène 35, un réchauffeur 32d est prévu sur la deuxième conduite d'alimentation en oxygène 32, par exemple entre le clapet anti-retour 32b et la restriction 32c. En l'espèce, le réchauffeur 32d est un réchauffeur électrique.

Afin de réguler la pression dans le réservoir tampon 15, une conduite d'échappement 16 est connectée au réservoir tampon 15 et munie d'un dispositif de régulation de la pression comprenant un clapet taré 16a et un raccord d'éjection 16b. Le raccord d'éjection 16b peut déboucher à l'air libre (notamment pour l'oxygène) ou vers une ligne de purge (notamment pour l'hydrogène). Le clapet taré 16a est configuré pour s'ouvrir lorsque la différence de pression à ses extrémités excède un certain seuil. Ceci permet de limiter la pression dans le réservoir tampon 15 et dans les conduites reliées au réservoir tampon 15 en amont et/ou en aval dudit réservoir tampon 15. La conduite d'échappement 16 permet d'évacuer tout surplus d'ergol fourni par la première conduite d'alimentation 11 et/ou par la deuxième conduite d'alimentation 12.

Par ailleurs, le dispositif d'alimentation 50 comprend une pile à combustible 20. Une conduite auxiliaire 14 s'étend entre le réservoir tampon 15 et la pile à combustible 20 pour alimenter en ergol gazeux la pile à combustible 20. La conduite auxiliaire 14 est munie d'une vanne 14a, d'une restriction 14b et d'un réchauffeur 14c. Le réchauffeur 14c est optionnel et sert à augmenter la température de l'ergol avant son entrée dans la pile à combustible 20 s'il n'a pas été déjà suffisamment chauffé par le réchauffeur 17 ou si la température optimale de fonctionnement de la pile à combustible 20 est supérieure à la température optimale de l'ergol en tant que fluide de pressurisation du réservoir principal 10.

Une structure similaire étant prévue pour le dispositif de pressurisation du réservoir principal 30, la pile à combustible 20 est donc alimentée en deux ergols par les première et deuxième conduites auxiliaires 14, 34. La réaction entre ces deux ergols permet de produire de l'électricité. La pile à combustible 20 peut donc alimenter électriquement tout ou partie des réchauffeurs 17, 37, 14c, 34c, 32d, le cas échéant, via un circuit électrique 22. Le circuit électrique 22 peut présenter un connecteur pour son raccord à une source de courant externe 23, par exemple une batterie ou un réseau externe.

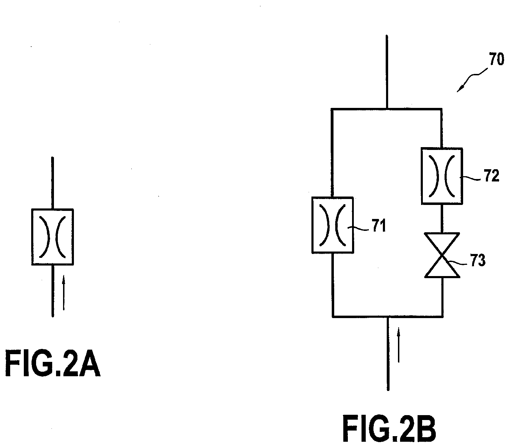

Par ailleurs, malgré leur représentation schématique sur la figure 1, les restrictions 12c, 13b, 14b, 32c, 33b, 34b peuvent être de tout type et notamment des restrictions simples, comme représenté sur la figure 2A, ou des restrictions réglables dites « tout-ou-peu ». Une restriction tout-ou-peu 70 est représentée sur la figure 2B. Elle comporte deux restrictions simples 71, 72 mises en parallèle, l'une des deux restrictions (en l'espèce la restriction 72) étant précédée, sur sa branche, d'une vanne 73. En pratique, le débit de la restriction 72 peut être par exemple deux à trois fois plus élevé que le débit de la restriction 71. Ainsi, lorsque la vanne 73 est fermée, un faible débit parcourt la restriction 70, tandis que lorsque la vanne 73 est ouverte, le débit parcourant la restriction 70 est beaucoup plus élevé. Le réglage d'une restriction tout-ou-peu est à la portée de l'homme du métier.

Un procédé de pressurisation du réservoir principal 10 peut se dérouler de la manière suivante. A l'état initial, les vannes 11a, 12a, 13a, 14a, 18a sont fermées. Dans un premier temps, au sol et avant le démarrage du moteur-fusée, le réservoir principal 10 est rempli d'ergol à l'état liquide à partir d'une alimentation d'ergol externe (non représentée). La vanne 11a est ouverte, de sorte que le réservoir tampon 15 se remplit partiellement en ergol liquide à partir du réservoir principal 10 dès lors que la pression hydrostatique de l'ergol en amont du clapet anti-retour 11b est supérieure au seuil d'ouverture de ce clapet 11b. La vanne 13a est également ouverte pendant ce temps là pour que le gaz présent dans le réservoir tampon puisse s'échapper. Le remplissage du réservoir tampon 15 s'arrête lorsqu'un niveau prédéfini est atteint. Ensuite, une fois les vannes 11a et 13a fermées suite à l'arrêt du remplissage du réservoir tampon 15, la source de courant externe 23 fournit au réchauffeur 17 l'énergie nécessaire pour chauffer et vaporiser l'ergol contenu dans le réservoir tampon. Dans les configurations usuelles, l'ergol commence tout de suite à bouillir (car dans le réservoir principal, sa température est généralement égale à la température de saturation de l'ergol sous 1 bar). Ainsi, la pression monte dans le réservoir tampon. En cas de pressurisation excessive, une partie de l'ergol vaporisé est évacuée par la conduite d'échappement 16. La phase de chauffe se termine quand l'ergol atteint un critère prédéfini de température ou de pression. On ouvre alors la vanne 14a pour alimenter la pile à combustible 20 avec ledit ergol.

Des opérations similaires peuvent être effectuées pour le deuxième ergol, le deuxième réservoir principal 30 et le deuxième réservoir tampon 35. La pile à combustible 20 est ainsi alimentée en deux ergols dont la réaction produit de l'électricité pouvant être utilisée par les réchauffeurs 17, 37. A partir de ce stade, la source de courant externe 23 n'est plus nécessaire pour le dispositif de pressurisation autogène 50.

On peut ensuite ouvrir la vanne 13a pour effectuer la pressurisation autogène du réservoir principal 10 à la pression nécessaire au démarrage du moteur. Une fois cette pression visée atteinte (ce qui est presque instantané dans les conditions usuelles), le moteur-fusée 40 peut être démarré ; on ouvre alors la vanne 18a pour l'alimenter en ergol à partir du réservoir principal 10.

Le fonctionnement du moteur-fusée 40 permet d'alimenter le réservoir tampon 15 à partir d'ergol réchauffé provenant du moteur-fusée 40 via la deuxième conduite d'alimentation 12. On peut donc ouvrir la vanne 12a. La pressurisation du réservoir principal 10 est ainsi assurée par un transfert contrôlé de l'ergol, du moteur fusée 40 au réservoir principal 10, par l'intermédiaire du réservoir tampon 15 où il peut être éventuellement réchauffé une fois de plus.

A l'extinction du moteur-fusée 40, le réservoir tampon 15 est plein. Il est suffisamment volumineux pour repressuriser le réservoir principal 10 avant tout redémarrage du moteur-fusée 40. Pendant la phase balistique, le réservoir tampon 15 peut s'échauffer du fait son exposition au soleil, et la pression de l'ergol gazeux augmenter. En cas de pression excessive, une partie de l'ergol est évacuée par la conduite d'échappement 16.

Un tel procédé de pressurisation est particulièrement avantageux dans la mesure où il n'est pas prévu de manipulation au sol des réservoirs tampons remplis et pressurisés, et où il n'est pas nécessaire d'amener des gaz sous haute pression à la table de lancement pour alimenter directement lesdits réservoirs tampons 15, 35.

En outre, bien qu'elle ait été présentée avant le lancement, au sol, la production de gaz dans les réservoirs tampons 15, 35 peut s'effectuer à d'autres instants, par exemple pendant le vol propulsé d'étages inférieurs. Par ailleurs, il ressort clairement de l'ensemble du présent exposé que le dispositif de pressurisation autogène 50 permet, à lui seul, de pressuriser le réservoir principal 10 non seulement avant le démarrage du moteur-fusée 40, mais aussi pendant le fonctionnement dudit moteur-fusée 40 et avant un redémarrage du moteur-fusée 40, par exemple en fin de phase balistique. En d'autres termes, le dispositif de pressurisation autogène 50 est capable d'assurer tous les besoins en pressurisation du dispositif d'alimentation de moteur-fusée 60.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif de pressurisation autogène (50) d'un réservoir principal d'ergol (10, 30), comprenant une conduite de pressurisation (13, 33) reliée au réservoir principal (10, 30) pour injecter de l'ergol dans ledit réservoir principal, une vanne de pressurisation (13a, 33a) disposée sur la conduite de pressurisation (13, 33), et un réchauffeur (17, 37) pour chauffer l'ergol en amont de la vanne de pressurisation (13a, 33a), le dispositif de pressurisation (50) étant **caractérisé en ce qu'**il comprend un réservoir tampon (15, 35) relié à la conduite de pressurisation (13, 33) en amont de la vanne de pressurisation (13a, 33a), **en ce que** le réchauffeur (17, 37) est électrique, **en ce que** le dispositif comprend en outre une pile à combustible (20) électriquement reliée au réchauffeur (17, 37) pour fournir de l'électricité au réchauffeur et **en ce qu'**une conduite auxiliaire (14, 34) s'étend entre le réservoir tampon (15, 35) et la pile à combustible (20) pour alimenter en ergol la pile à combustible.

2. Dispositif de pressurisation (50) selon la revendication 1, le réchauffeur (17, 37) étant installé de manière à chauffer l'ergol contenu dans le réservoir tampon (15, 35).

3. Dispositif de pressurisation (50) selon la revendication 1 ou 2, comprenant une première conduite d'alimentation (11, 31) reliant le réservoir principal (10, 30) au réservoir tampon (15, 35) et apte à alimenter le réservoir tampon en ergol provenant du réservoir principal.

4. Dispositif de pressurisation (50) selon l'une quelconque des revendications 1 à 3, comprenant une deuxième conduite d'alimentation (12, 32) reliée au réservoir tampon (15, 35) et pouvant se connecter à un circuit d'alimentation en ergol d'un moteur-fusée (40) pour alimenter le réservoir tampon en ergol provenant dudit circuit d'alimentation.

5. Dispositif de pressurisation (50) selon l'une quelconque des revendications 1 à 4, comprenant en outre une conduite d'échappement (16, 36) connectée au réservoir tampon (15, 35) et munie d'un dispositif de régulation de la pression (16a, 16b, 36a, 36b) dans le réservoir tampon.

6. Dispositif d'alimentation de moteur-fusée (60) comprenant un premier réservoir principal (10) apte à contenir un premier ergol, un premier dispositif de pressurisation selon l'une quelconque des revendications 1 à 5 pour pressuriser le premier réservoir principal, un deuxième réservoir principal (30) apte à contenir un deuxième ergol et un deuxième dispositif de pressurisation selon l'une quelconque des revendications 1 à 5 pour pressuriser le deuxième réservoir principal, dans lequel la pile à combustible (20) est configurée pour produire de l'électricité à partir de la réaction entre le premier ergol et le deuxième ergol.

7. Procédé de pressurisation d'un réservoir principal d'ergol, **caractérisé en ce qu'**il comprend :
- le remplissage d'un réservoir tampon (15, 35) en ergol à partir du réservoir principal (10, 30) ;
- le chauffage, par un réchauffeur électrique (17, 37) alimenté par une pile à combustible (20), du fluide de pressurisation situé en amont d'une vanne de pressurisation (13a, 33a), la vanne de pressurisation étant disposée sur une conduite de pressurisation (13, 33) reliant le réservoir tampon (15, 35) au réservoir principal (10, 30), et la pile à combustible (20) étant alimentée en ergol par une conduite auxiliaire (14, 34) s'étendant entre le réservoir tampon (15, 35) et ladite pile à combustible (20) ;
- l'ouverture de la vanne de pressurisation (13a, 33a) pour permettre la circulation de l'ergol chauffé vers le réservoir principal (10, 30).

8. Procédé de pressurisation selon la revendication 7, comprenant, avant l'étape de remplissage du réservoir tampon (15, 35), le remplissage du réservoir principal (10, 30) en ergol à l'état liquide à partir d'une alimentation d'ergol externe.

## Patentansprüche

1. Autogene Druckbeaufschlagungsvorrichtung (50) für einen Haupttreibstoffbehälter (10, 30), umfassend eine Druckbeaufschlagungsleitung (13, 33), die mit dem Hauptbehälter (10, 30) verbunden ist, um Treibstoff in den Hauptbehälter einzuspritzen, ein Druckbeaufschlagungsventil (13a, 33a), das an der Druckbeaufschlagungsleitung (13, 33) angeordnet ist, und einen Vorwärmer (17, 37) zum Erwärmen des Treibstoffs vor dem Druckbeaufschlagungsventil (13a, 33a), wobei die Druckbeaufschlagungsvorrichtung (50) **dadurch gekennzeichnet ist, dass** sie einen Pufferbehälter (15, 35) umfasst, der mit der Druckbeaufschlagungsleitung (13, 33) vor dem Druckbeaufschlagungsventil (13a, 33a) verbunden ist, dadurch, dass der Vorwärmer (17, 37) elektrisch ist, dadurch, dass die Vorrichtung ferner eine Brennstoffzelle (20) umfasst, die mit dem Vorwärmer (17, 37) elektrisch verbunden ist, um den Vorwärmer mit Elektrizität zu versorgen, und dadurch, dass sich eine Hilfsleitung (14, 34) zwischen dem Pufferbehälter (15, 35) und der Brennstoffzelle (20) erstreckt, um der Brennstoffzelle Treibstoff zuzuführen.

2. Druckbeaufschlagungsvorrichtung (50) nach Anspruch 1, wobei der Vorwärmer (17, 37) so eingebaut ist, dass er den Treibstoff erwärmt, der in dem Pufferbehälter (15, 35) enthalten ist.

3. Druckbeaufschlagungsvorrichtung (50) nach Anspruch 1 oder 2, umfassend eine erste Zuführungsleitung (11, 31), die den Hauptbehälter (10, 30) mit dem Pufferbehälter (15, 35) verbindet und geeignet ist, dem Pufferbehälter Treibstoff zuzuführen, der aus dem Hauptbehälter stammt.

4. Druckbeaufschlagungsvorrichtung (50) nach einem der Ansprüche 1 bis 3, umfassend eine zweite Zuführungsleitung (12, 32), die mit dem Pufferbehälter (15, 35) verbunden ist und sich mit einem Zuführungskreislauf von Treibstoff eines Raketentriebwerks (40) verbinden kann, um dem Pufferbehälter Treibstoff zuzuführen, der aus dem Zuführungskreislauf stammt.

5. Druckbeaufschlagungsvorrichtung (50) nach einem der Ansprüche 1 bis 4, ferner umfassend eine Abgasleitung (16, 36), die mit dem Pufferbehälter (15, 35) verbunden und mit einer Vorrichtung (16a, 16b, 36a, 36b) zur Regelung des Drucks in dem Pufferbehälter ausgestattet ist.

6. Zuführvorrichtung (60) eines Raketentriebwerks, umfassend einen ersten Hauptbehälter (10), der geeignet ist, einen ersten Treibstoff zu enthalten, eine erste Druckbeaufschlagungsvorrichtung nach einem der Ansprüche 1 bis 5 zur Druckbeaufschlagung des ersten Hauptbehälters, einen zweiten Hauptbehälter (30), der geeignet ist, einen zweiten Treibstoff zu enthalten, und eine zweite Druckbeaufschlagungsvorrichtung nach einem der Ansprüche 1 bis 5 zur Druckbeaufschlagung des zweiten Hauptbehälters, wobei die Brennstoffzelle (20) dazu ausgestaltet ist, Elektrizität aus der Reaktion zwischen dem ersten Treibstoff und dem zweiten Treibstoff zu erzeugen.

7. Verfahren zur Druckbeaufschlagung eines Haupttreibstoffbehälters, **dadurch gekennzeichnet, dass** es umfasst:
- Befüllen eines Pufferbehälters (15, 35) mit Treibstoff aus dem Hauptbehälter (10, 30),
- Erwärmen von Druckbeaufschlagungsfluid, das sich vor einem Druckbeaufschlagungsventil (13a, 33a) befindet, durch einen elektrischen Vorwärmer (17, 37), dem es durch eine Brennstoffzelle (20) zugeführt wird, wobei das Druckbeaufschlagungsventil an einer Druckbeaufschlagungsleitung (13, 33) angeordnet ist, die den Pufferbehälter (15, 35) mit dem Hauptbehälter (10, 30) verbindet, und der Brennstoffzelle (20) Treibstoff durch eine Hilfsleitung (14, 34) zugeführt wird, die sich zwischen dem Pufferbehälter (15, 35) und der Brennstoffzelle (20) erstreckt,
- Öffnen des Druckbeaufschlagungsventils (13a, 33a), um die Zirkulation des erwärmten Treibstoffs zu dem Hauptbehälter (10, 30) zu ermöglichen.

8. Verfahren zur Druckbeaufschlagung nach Anspruch 7, umfassend, vor dem Schritt des Befüllens des Pufferbehälters (15, 35), das Befüllen des Hauptbehälters (10, 30) mit Treibstoff im flüssigen Zustand aus einer externen Treibstoffzufuhr.

## Claims

1. An autogenous pressurizer device (50) for a main propellant tank (10, 30), the device comprising a pressurizer pipe (13, 33) connected to the main tank (10, 30) to inject propellant into said main tank, a pressurizer valve (13a, 33a) arranged on the pressurizer pipe (13, 33), and a heater (17, 37) for heating the propellant upstream from the pressurizer valve (13a, 33a), the pressurizer device (50) being **characterized in that** it includes a buffer tank (15, 35) connected to the pressurizer pipe (13, 33) upstream from the pressurizer valve (13a, 33a), **in that** the heater (17, 37) is electric, **in that** the device further includes a fuel cell (20) electrically connected to the heater (17, 37) for supplying electricity to the heater, and **in that** an auxiliary pipe (14, 34) extends between the buffer tank (15, 35) and the fuel cell (20) in order to feed the fuel cell with propellant.

2. A pressurizer device (50) according to claim 1, the heater (17, 37) being installed so as to heat the propellant contained in the buffer tank (15, 35).

3. A pressurizer device (50) according to claim 1 or claim 2, including a first feed pipe (11, 31) connecting the main tank (10, 30) to the buffer tank (15, 35) and suitable for feeding the buffer tank with propellant coming from the main tank.

4. A pressurizer device (50) according to any one of claims 1 to 3, including a second feed pipe (12, 32) connected to the buffer tank (15, 35) and capable of being connected to a propellant feed circuit of a rocket engine (40) in order to feed the buffer tank with propellant coming from said feed circuit.

5. A pressurizer device (50) according to any one of claims 1 to 4, further including an exhaust pipe (16, 36) connected to the buffer tank (15, 35) and provided with a regulator device (16a, 16b, 36a, 36b) for regulating the pressure in the buffer tank.

6. A rocket engine feed device (60) including a first main tank (10) suitable for containing a first propellant, a first pressurizer device according to any one of claims 1 to 5 for pressurizing the first main tank, a second main tank (30) suitable for containing a second propellant, and a second pressurizer device according to any one of claims 1 to 5 for pressurizing the second main tank, wherein the fuel cell (20) is configured to produce electricity from a reaction between the first propellant and the second propellant.

7. A pressurizing method for pressurizing a main propellant tank, the method being **characterized in that** it comprises:
• filling a buffer tank (15, 35) with propellant from the main tank (10, 30);
• using an electric heater (17, 37) powered by a fuel cell (20) to heat the pressurizing fluid situated upstream from a pressurizer valve (13a, 33a), the pressurizer valve being arranged in a pressurizer pipe (13, 33) connecting the buffer tank (15, 35) to the main tank (10, 30), and the fuel cell (20) being fed with propellant by an auxiliary pipe (14, 34) extending between the buffer tank (15, 35) and said fuel cell (20); and
• opening the pressurizer valve (13a, 33a) to enable the heated propellant to flow to the main tank (10, 30).

8. A pressuring method according to claim 7, including, before the step of filling the buffer tank (15, 35), filling the main tank (10, 30) with propellant in the liquid state from an external propellant feed.
